# EUROPÄISCHE PATENTSCHRIFT

(11) **EP 4 630 715 B1**
(45) Veröffentlichungstag und Bekanntmachung des Hinweises auf die Patenterteilung: **23.09.2026**
(21) Anmeldenummer: 23817324.9
(22) Anmeldetag: 28.11.2023
(51) Int. Cl.: F16K 11/00, F16K 27/00, E03C 1/042

(54) **KUNSTSTOFFWASSERFÜHRUNG FÜR EINE MISCHARMATUR, MISCHARMATUR MIT EINER KUNSTSTOFFWASSERFÜHRUNG UND VERFAHREN ZUR HERSTELLUNG EINER KUNSTSTOFFWASSERFÜHRUNG**
PLASTIC WATER DUCT FOR A MIXING FAUCET, MIXING FAUCET HAVING A PLASTIC WATER DUCT, AND PROCESS FOR MANUFACTURING A PLASTIC WATER DUCT
CONDUIT D'EAU EN PLASTIQUE POUR ROBINET MÉLANGEUR, ROBINET MÉLANGEUR AYANT UN CONDUIT D'EAU EN PLASTIQUE, ET PROCÉDÉ DE FABRICATION D'UN CONDUIT D'EAU EN PLASTIQUE

(30) Priorität: 07.12.2022 DE 102022132584
(43) Veröffentlichungstag der Anmeldung: 15.10.2025
(73) Patentinhaber: Grohe AG, 58675 Hemer (DE)
(72) Erfinder: VOELLER, Martin, 58675 Hemer (DE); LUIG, Frank-Thomas, 58708 Menden (DE)
(86) Internationale Anmeldenummer: PCT/EP2023/083413
(87) Internationale Veröffentlichungsnummer: WO 2024/120899

(56) Entgegenhaltungen:
- EP-A1- 3 444 406
- EP-A2- 2 388 676
- GB-A- 2 588 849

## Beschreibung

Die vorliegende Erfindung betrifft eine Kunststoffwasserführung für eine Mischarmatur, eine Mischarmatur mit der Kunststoffwasserführung und ein Verfahren zur Herstellung der Kunststoffwasserführung. Mittels der Mischarmatur ist Mischwasser mit einer gewünschten Mischwassertemperatur insbesondere an Waschbecken, Spülbecken, Duschen und/oder Badewannen bereitstellbar.

Mischarmaturen weisen regelmäßig ein Armaturengehäuse auf, in dem komplexe Flüssigkeitskanäle für Warmwasser und Kaltwasser ausgebildet sind. Über die Flüssigkeitskanäle sind das Warmwasser und Kaltwasser einem Mischventil, beispielsweise nach Art eines Thermostatmischers, zuführbar. Beim Durchströmen der Flüssigkeitskanäle kommt das Warmwasser und/oder Kaltwasser zumindest in Teilbereichen mit dem Armaturengehäuse in Kontakt, sodass das Armaturengehäuse aus einem für Trinkwasser geeignetem Material, wie zum Beispiel Messing, bestehen muss. Die Herstellung derartiger Armaturengehäuse ist jedoch mit hohen Kosten verbunden.

Daher sind Mischarmaturen bekannt, in denen die Flüssigkeitskanäle durch Kunststoffwasserführungen ausgebildet sind, beispielsweise aus GB 2588849 A, EP 2 388 676 A2, EP 3 444 406 A1. Die Kunststoffwasserführungen müssen mit Dichtungen, beispielsweise nach Art von O-Ringen, abgedichtet werden, die zusätzlichen Bauraum erfordern, wodurch eine Ausgestaltung des Armaturengehäuses mit einem sehr kleinen Außendurchmesser verhindert wird. Für Mischarmaturen mit einem besonders schlanken Armaturengehäuse besteht jedoch eine hohe Nachfrage.

Aufgabe der Erfindung ist es daher, die mit Bezug auf den Stand der Technik geschilderten Probleme zumindest teilweise zu lösen und insbesondere eine Kunststoffwasserführung anzugeben, mit der eine Anzahl erforderlicher Dichtungen zumindest reduzierbar ist. Zudem soll eine Mischarmatur angegeben werden, deren Kunststoffwasserführung eine Reduktion erforderlicher Dichtungen ermöglicht. Weiterhin soll ein Verfahren zur Herstellung einer Kunststoffwasserführung angegeben werden, mit der eine Anzahl erforderlicher Dichtungen zumindest reduzierbar ist.

Diese Aufgaben werden gelöst mit einer Kunststoffwasserführung, einer Mischarmatur und einem Verfahren gemäß den Merkmalen der unabhängigen Patentansprüche. Weitere vorteilhafte Ausgestaltungen der Erfindung sind in den abhängigen Patentansprüchen angegeben.. Darüber hinaus werden die in den Patentansprüchen angegebenen Merkmale in der Beschreibung näher präzisiert und erläutert, wobei weitere bevorzugte Ausgestaltungen der Erfindung dargestellt werden.

Hierzu trägt eine Kunststoffwasserführung für eine Mischarmatur bei, die zumindest Folgendes aufweist:
- eine rohrförmige äußere Kunststoffwasserführung, die sich entlang einer Längsachse erstreckt;
- eine rohrförmige innere Kunststoffwasserführung, die sich entlang der Längsachse erstreckt und zumindest teilweise in der äußeren Kunststoffwasserführung angeordnet ist, sodass zwischen der inneren Kunststoffwasserführung und der äußeren Kunststoffwasserführung zumindest ein Warmwasserkanal ausgebildet ist; und
- zumindest einen Mischwasserabgang, der sich durch die innere Kunststoffwasserführung und die äußere Kunststoffwasserführung erstreckt, wobei der zumindest eine Mischwasserabgang zumindest teilweise eine Überspritzung aus Kunststoff aufweist.

Die Mischarmatur kann beispielsweise nach Art einer Thermostatmischarmatur, einer Auf-Putz-Brausethermostatarmatur, einer Auf-Putz-Wannenthermostatarmatur, eines Auf-Putz-Duschsystems (mit oder ohne (Kopf-)Brause) und/oder eines Auf-Putz-Wannensystems (mit oder ohne (Kopf-)Brause) ausgebildet sein. Die Mischarmatur kann insbesondere der bedarfsgerechten Bereitstellung eines Mischwassers an einem Waschbecken, einem Spülbecken, einer Dusche und/oder einer Badewanne dienen. Hierzu kann an die Mischarmatur beispielsweise über einen flexiblen Schlauch und/oder eine Rohrleitung eine Brause, beispielsweise nach Art einer Handbrause oder Kopfbrause, anschließbar sein.

Die Mischarmatur kann ein Mischventil, beispielsweise nach Art eines Thermostatmischers bzw. einer Thermostatmischkartusche, aufweisen. Durch das Mischventil kann Warmwasser mit einer Warmwassertemperatur und Kaltwasser mit einer Kaltwassertemperatur zu einem Mischwasser mit einer gewünschten Mischwassertemperatur mischbar sein. Die Mischwassertemperatur ist insbesondere durch ein Regelelement, beispielsweise nach Art eines Dehnstoffelements, des Mischventils regelbar. Die Warmwassertemperatur beträgt insbesondere maximal 90 °C, bevorzugt 25 °C bis 90 °C, besonders bevorzugt 55 °C bis 65 °C und/oder die Kaltwassertemperatur insbesondere maximal 25 °C (Celsius), bevorzugt 1 °C bis 25 °C, besonders bevorzugt 5 °C bis 20 °C. Das Mischventil ist insbesondere in einem Armaturengehäuse der Mischarmatur angeordnet, mit dem die Mischarmatur an einem Träger, wie zum Beispiel einer (Gebäude-)Wand, befestigbar ist. Das Mischventil kann sich über ein erstes längsseitiges Ende der äußeren Kunststoffwasserführung zumindest teilweise in die Kunststoffwasserführung erstrecken.

Die Mischarmatur kann ein Ventil zur Steuerung einer Abgabe des Mischwassers über den zumindest einen Mischwasserabgang der Kunststoffwasserführung aufweisen.

Das Armaturengehäuse kann zumindest teilweise oder vollständig aus einer Zinklegierung bestehen. Bei der Zinklegierung handelt es sich insbesondere um eine Metalllegierung, deren Hauptbestandteil bzw. Basismetall Zink (Zn) ist. Dies kann insbesondere bedeuten, dass Zink im Vergleich zu den übrigen Legierungsbestandteilen der Zinklegierung den größten Massenanteil aufweist. Die Zinklegierung kann Zink mit einem Massenanteil von mehr als 80 % aufweisen. Insbesondere kann die Zinklegierung Zink mit einem Massenanteil von mehr als 90 % oder 95 % aufweisen. Die Zinklegierung bzw. das Zink weist im Vergleich zu Kupfer oder einer Kupferlegierung, wie zum Beispiel Messing, eine unterschiedliche Kristallstruktur auf, nämlich hexagonal statt kubisch-flächenzentriert. Bei der Zinklegierung kann es sich insbesondere um eine sogenannte Zamak-Legierung handeln. Als weitere Legierungsbestandteile kann die Zinklegierung beispielsweise zumindest Aluminium (Al), Magnesium (Mg) und/oder Kupfer (Cu) umfassen. Insbesondere kann die Zinklegierung folgende Massenanteile von Legierungsbestandteilen umfassen:
a) 3,8 - 4,2 % Al, 0,035 - 0,06 % Mg, Rest (insbesondere) Zn (Zamak-Legierung ZL0400),
b) 3,8 - 4,2 % Al, 0,7 - 1,1 % Cu, 0,035 - 0,06 % Mg, Rest (insbesondere) Zn (Zamak-Legierung ZL0410) oder
c) 3,8 - 4,2 % Al, 2,7 - 3,3 % Cu, 0,035 - 0,06 % Mg, Rest (insbesondere) Zn (Zamak-Legierung ZL0430).

Das Armaturengehäuse kann durch ein Zinkdruckgussverfahren hergestellt sein. Bei dem Zinkdruckgussverfahren wird insbesondere eine flüssige Schmelze der Zinklegierung unter Druck in eine Druckgussform gedrückt. Nach einem Erstarren der Schmelze kann das Armaturengehäuse entformt und ggf. mechanisch bearbeitet werden. Bei dem Armaturengehäuse handelt es sich daher insbesondere um ein Zinkdruckgussteil.

Das Armaturengehäuse kann einen Warmwasserzulauf für das Warmwasser und einen Kaltwasserzulauf für das Kaltwasser aufweisen. An den Warmwasserzulauf ist insbesondere eine Warmwasserzuführleitung bzw. ein Warmwasserzuführrohr für das Warmwasser und/oder an den Kaltwasserzulauf insbesondere eine Kaltwasserzuführleitung bzw. ein Kaltwasserzuführrohr für das Kaltwasser anschließbar.

Das Warmwasser ist dem Mischventil über eine Kunststoffwasserführung insbesondere ohne Kontakt zu dem Armaturengehäuse zuführbar. Die Kunststoffwasserführung ist bei einer Herstellung bzw. einer Montage der Mischarmatur insbesondere in einem Montageraum des Armaturengehäuses anordenbar bzw. in den Montageraum einsteckbar. Der Montageraum kann beispielsweise (im Wesentlichen) zylinderförmig ausgebildet sein und/oder sich entlang einer Gehäuselängsachse des Armaturengehäuses erstrecken. Die Gehäuselängsachse kann eine Zentrumsachse des Montageraums darstellen.

Das Kaltwasser ist von dem zweiten Zulauf über zumindest einen Kaltwasserkanal dem Mischventil zuführbar. Der zumindest eine Kaltwasserkanal ist insbesondere in dem Montageraum des Armaturengehäuses ausgebildet. Weiterhin können der zumindest eine Warmwasserkanal und der zumindest eine Kaltwasserkanal derart ausgebildet sein, dass sie sich innerhalb des Armaturengehäuses nicht kreuzen. Der zumindest eine Kaltwasserkanal kann zumindest teilweise ringförmig ausgebildet sein. Der zumindest eine Kaltwasserkanal kann sich zumindest teilweise um das Mischventil erstrecken. Dies kann insbesondere bedeuten, dass das Mischventil den Kaltwasserkanal, insbesondere innen, begrenzt.

Die Kunststoffwasserführung erstreckt sich entlang einer, insbesondere geraden, Längsachse. Die Kunststoffwasserführung weist eine rohrförmige äußere Kunststoffwasserführung auf, die sich entlang der Längsachse erstreckt. Die äußere Kunststoffwasserführung kann zumindest teilweise oder vollständig aus Kunststoff bestehen. Insbesondere kann die äußere Kunststoffwasserführung als Kunststoffspritzgussteil ausgebildet sein. Die äußere Kunststoffwasserführung kann sich entlang der Längsachse von einem ersten längsseitigen Ende zu einem zweiten längsseitigen Ende erstrecken. Die äußere Kunststoffwasserführung kann (insbesondere parallel zu der Längsachse) eine erste Länge von beispielsweise 100 mm bis 300 mm aufweisen. Die äußere Kunststoffwasserführung kann einen ersten Außendurchmesser von beispielsweise maximal 60 mm [Millimeter], bevorzugt 20 mm bis 60 mm, besonders bevorzugt 20 mm bis 40 mm, und/oder einen ersten Innendurchmesser von beispielsweise maximal 58 mm, bevorzugt 18 mm bis 58 mm, besonders bevorzugt 18 mm bis 38 mm, aufweisen. Der erste Außendurchmesser bemisst sich insbesondere an einer ersten äußeren Umfangsfläche der äußeren Kunststoffwasserführung und/oder orthogonal zu der Längsachse. Der erste Innendurchmesser bemisst sich insbesondere an einer ersten inneren Umfangsfläche der äußeren Kunststoffwasserführung und/oder orthogonal zu der Längsachse. An der ersten äußeren Umfangsfläche und/oder ersten inneren Umfangsfläche ausgebildete Strukturen, beispielsweise nach Art zumindest einer Rippe, eines Stegs und/oder zumindest eines ringförmigen Ansatzes, können beim Messen des ersten Außendurchmesser und/oder ersten Innendurchmesser unberücksichtigt bleiben.

Die Kunststoffwasserführung weist eine rohrförmig innere Kunststoffwasserführung auf, die sich entlang der Längsachse erstreckt und zumindest teilweise oder vollständig in der äußeren Kunststoffwasserführung angeordnet ist. Die innere Kunststoffwasserführung kann zumindest teilweise oder vollständig aus Kunststoff bestehen. Insbesondere kann die innere Kunststoffwasserführung nach Art eines Kunststoffspritzgussteils ausgebildet sein. Die innere Kunststoffwasserführung kann sich entlang der Längsachse von einem dritten längsseitigen Ende zu einem vierten längsseitigen Ende erstrecken. Die innere Kunststoffwasserführung kann (insbesondere parallel zu der Längsachse) eine zweite Länge von beispielsweise 50 mm bis 280 mm aufweisen. Die zweite Länge der inneren Kunststoffwasserführung kann kürzer sein als die erste Länge der äußeren Kunststoffwasserführung. Die innere Kunststoffwasserführung kann einen zweiten Außendurchmesser von beispielsweise maximal 56 mm, bevorzugt 16 mm bis 56 mm, besonders bevorzugt 16 mm bis 36 mm, und/oder einen zweiten Innendurchmesser von beispielsweise maximal 54 mm, bevorzugt 14 mm bis 54 mm, besonders bevorzugt 14 mm bis 34 mm, aufweisen. Der zweite Außendurchmesser der inneren Kunststoffwasserführung kann kleiner sein als der erste Innendurchmesser der äußeren Kunststoffwasserführung. Der zweite Außendurchmesser bemisst sich insbesondere an einer zweiten äußeren Umfangsfläche der inneren Kunststoffwasserführung und/oder orthogonal zu der Längsachse. Der zweite Innendurchmesser bemisst sich insbesondere an einer zweiten inneren Umfangsfläche der inneren Kunststoffwasserführung und/oder orthogonal zu der Längsachse. An der zweiten äußeren Umfangsfläche und/oder ersten inneren Umfangsfläche ausgebildete Strukturen, beispielsweise nach Art der zumindest einen Rippe, des Stegs und/oder des zumindest einen ringförmigen Ansatzes, können beim Messen des zweiten Außendurchmesser und/oder zweiten Innendurchmesser unberücksichtigt bleiben.

Zwischen der inneren Kunststoffwasserführung und der äußeren Kunststoffwasserführung ist zumindest ein Warmwasserkanal ausgebildet. Die äußere Kunststoffwasserführung kann zumindest einen Warmwassereinlass aufweisen, über den das Warmwasser dem zumindest einen Warmwasserkanal zuführbar ist. Der zumindest eine Warmwassereinlass kann nach Art einer Bohrung bzw. einer Öffnung ausgebildet sein und/oder sich zumindest teilweise orthogonal zu der Längsachse von der ersten äußeren Umfangsfläche zu der ersten inneren Umfangsfläche der äußeren Kunststoffwasserführung erstrecken. Über den zumindest einen Warmwasserkanal ist das Warmwasser insbesondere von dem Warmwasserzulauf ohne Kontakt zu dem Armaturengehäuse dem Mischventil zuführbar. Hierzu kann sich der zumindest eine Warmwasserkanal in dem Armaturengehäuse von dem Warmwasserzulauf bis zu dem Mischventil erstrecken. Der zumindest eine Warmwasserkanal kann sich zumindest teilweise oder vollständig parallel zu der Längsachse erstrecken und/oder zumindest teilweise ringförmig ausgebildet sein. Der zumindest eine Warmwasserkanal kann durch die erste innere Umfangsfläche der äußeren Kunststoffwasserführung und die zweite äußere Umfangsfläche der inneren Kunststoffwasserführung begrenzt werden und/oder sich zwischen der ersten inneren Umfangsfläche der äußeren Kunststoffwasserführung und der zweiten äußeren Umfangsfläche der inneren Kunststoffwasserführung erstrecken.

Die Kunststoffwasserführung weist zumindest einen Mischwasserabgang für das Mischwasser auf, der sich durch die innere Kunststoffwasserführung und die äußere Kunststoffwasserführung erstreckt. Der zumindest eine Mischwasserabgang kann nach Art einer Bohrung und/oder eines Flüssigkeitskanals ausgebildet sein. Der zumindest eine Mischwasserabgang kann (im Wesentlichen) einen geraden Verlauf aufweisen. Der zumindest eine Mischwasserabgang kann sich orthogonal zu der Längsachse erstrecken. Der zumindest eine Mischwasserabgang kann sich von der zweiten inneren Umfangsfläche der inneren Kunststoffwasserführung zu der ersten äußeren Umfangsfläche der äußeren Kunststoffwasserführung erstrecken. Über den zumindest einen Mischwasserabgang kann das Mischwasser zumindest einem Mischwasserablauf der Mischarmatur und/oder zumindest einer Auslauföffnung der Mischarmatur zuführbar sein. An den zumindest einen Mischwasserablauf kann beispielsweise der flexible Schlauch und/oder die Rohrleitung anschließbar sein, über die das Mischwasser zum Beispiel der Brause zuführbar sein kann. Hierzu kann der zumindest eine Mischwasserablauf ein Gewinde aufweisen. Die zumindest eine Auslauföffnung der Mischarmatur kann beispielsweise einen Mousseur, zumindest eine Düse und/oder zumindest einen Strahlbildner umfassen. Über die zumindest eine Auslauföffnung der Mischarmatur kann das Mischwasser beispielsweise an eine Umgebung der Mischarmatur abgebbar sein. Der zumindest eine Mischwasserabgang kann einen Durchmesser von beispielsweise 5 mm bis 25 mm aufweisen.

Der zumindest eine Mischwasserabgang weist, insbesondere zur Abdichtung, zumindest teilweise eine Überspritzung aus Kunststoff auf. Die Überspritzung kann beispielsweise durch ein Spritzgussverfahren (zum Beispiel durch "Overmolding") bzw. mithilfe einer Spritzgussmaschine erzeugt werden. Die Überspritzung ist insbesondere durch zumindest teilweises Überspritzen einer Innenfläche des zumindest einen Mischwasserabgangs erzeugbar. Die Überspritzung kann eine Schichtdicke von beispielsweise 0,5 mm bis 5 mm aufweisen. Die Überspritzung erstreckt sich zumindest teilweise über die Innenfläche des zumindest einen Mischwasserabgangs und/oder bildet zumindest teilweise die Innenfläche des zumindest einen Mischwasserabgangs. Die Überspritzung ist insbesondere stoffschlüssig mit dem und/oder in dem zumindest einen Mischwasserabgang ausgebildet. Die Überspritzung kann insbesondere stoffschlüssig mit der Innenfläche des zumindest einen Mischwasserabgangs verbunden sein. Die Überspritzung kann mit der inneren Kunststoffwasserführung und/oder der äußeren Kunststoffwasserführung stoffschlüssig verbunden sein. Die Überspritzung kann die innere Kunststoffwasserführung und die äußere Kunststoffwasserführung aneinander befestigen.

Die Überspritzung dichtet den zumindest einen Mischwasserabgang ab, sodass insbesondere kein Mischwasser aus dem zumindest einen Mischwasserabgang in den zumindest einen Warmwasserkanal und/oder insbesondere kein Warmwasser aus dem zumindest einen Warmwasserkanal (insbesondere unter Umgehung des Mischventils) in den zumindest einen Mischwasserabgang austreten kann. Die Überspritzung erstreckt sich insbesondere über eine Fuge bzw. eine Kontaktstelle zwischen der äußeren Kunststoffwasserführung und der inneren Kunststoffwasserführung. Die Überspritzung erstreckt sich insbesondere über eine Fuge bzw. eine Kontaktstelle zwischen einem ringförmigen Ansatz zur zumindest teilweisen Ausbildung des zumindest einen Mischwasserabgangs und der äußeren Kunststoffwasserführung und/oder insbesondere über eine Fuge bzw. eine Kontaktstelle zwischen dem ringförmigen Ansatz und der inneren Kunststoffwasserführung. Die Überspritzung verhindert, dass eine Flüssigkeit, insbesondere das Warmwasser und/oder das Mischwasser, durch die Fuge bzw. die Kontaktstelle strömen kann. Durch die Überspritzung sind zur Abdichtung des zumindest einen Mischwasserabgangs keine separaten Dichtungen, beispielsweise in Form von O-Ringen, erforderlich.

Die Überspritzung kann zumindest teilweise hülsenförmig ausgebildet sein. Dies kann beispielsweise bedeuten, dass die Überspritzung zumindest teilweise rohrförmig ausgebildet ist. Die Überspritzung kann sich (insbesondere orthogonal zu der Längsachse) entlang einer (insbesondere geraden) Überspritzungslängsachse erstrecken.

Die Überspritzung kann sich von einer ersten äußeren Umfangsfläche der äußeren Kunststoffwasserführung bis zu einer zweiten äußeren Umfangsfläche der inneren Kunststoffwasserführung erstrecken. Zwischen der ersten äußeren Umfangsfläche der äußeren Kunststoffwasserführung und der zweiten äußeren Umfangsfläche der inneren Kunststoffwasserführung kann beispielsweise (insbesondere orthogonal zu der Längsachse) ein Umfangsflächenabstand von beispielsweise 1 mm bis 25 mm bestehen.

Die Überspritzung kann im Bereich einer ersten äußeren Umfangsfläche der äußeren Kunststoffwasserführung einen umlaufenden Kragen aufweisen. Der Kragen kann ringförmig ausgebildet sein und/oder sich in eine Vertiefung der ersten äußeren Umfangsfläche der äußeren Kunststoffwasserführung erstrecken. Die Überspritzung bzw. der Kragen der Überspritzung kann bündig mit der ersten äußeren Umfangsfläche abschließen.

Die Überspritzung kann zumindest eine Verbindungsstruktur aufweisen, mit der die Überspritzung formschlüssig an der äußeren Kunststoffwasserführung und/oder der inneren Kunststoffwasserführung befestigt ist. Die zumindest eine Verbindungsstruktur kann an einer Außenfläche der Überspritzung ausgebildet sein.

Die zumindest eine Verbindungstruktur kann als bzw. nach Art eines umlaufenden Stegs ausgebildet sein.

Die Überspritzung kann zumindest teilweise aus einem gleichen Material wie die äußere Kunststoffwasserführung und/oder die innere Kunststoffwasserführung bestehen. Beispielsweise kann die Überspritzung, die äußere Kunststoffwasserführung und/oder die innere Kunststoffwasserführung zumindest teilweise aus Polyamid, zum Beispiel PA12 GF50, bestehen.

Der zumindest eine Mischwasserabgang kann sich zumindest teilweise durch den zumindest einen Warmwasserkanal erstrecken. Dies kann beispielsweise bedeuten, dass der zumindest eine Mischwasserabgang und der zumindest eine Warmwasserkanal sich kreuzen.

Die Kunststoffwasserführung kann Folgendes aufweisen:
- einen ersten Mischwasserabgang, der sich durch die innere Kunststoffwasserführung und die äußere Kunststoffwasserführung erstreckt; und
- einen zweiten Mischwasserabgang, der sich durch die innere Kunststoffwasserführung und die äußere Kunststoffwasserführung erstreckt, wobei der erste Mischwasserabgang und der zweite Mischwasserabgang um die Längsachse mit einem Winkel von 100° bis 140° versetzt zueinander ausgebildet sind.

Der erste Mischwasserabgang und der zweite Mischwasserabgang sind um die Längsachse mit einem Winkel von 100° bis 140°, bevorzugt 110° bis 130°, besonders bevorzugt (im Wesentlichen) 120°, versetzt zueinander angeordnet. Dies ermöglicht insbesondere eine Verwendung der (gleichen) Kunststoffwasserführung in unterschiedlichen Mischarmaturen, beispielsweise indem die Kunststoffwasserführung in dem Armaturengehäuse der Mischarmaturen und/oder um die Längsachse (lediglich) um einen Drehwinkel gedreht werden. Der Drehwinkel kann beispielsweise 110° bis 130° betragen. Durch die Kunststoffwasserführung ist eine Variantenvielfalt der Kunststoffwasserführungen reduzierbar, wodurch Herstellungskosten der Kunststoffwasserführungen und der Mischarmaturen reduzierbar sind.

Die innere Kunststoffwasserführung und/oder die äußere Kunststoffwasserführung können zumindest eine Rippe aufweisen, mit der die innere Kunststoffwasserführung und die äußere Kunststoffwasserführung voneinander beabstandet sind. Mit der zumindest einen Rippe ist insbesondere die erste innere Umfangsfläche der äußeren Kunststoffwasserführung von der zweiten äußeren Umfangsfläche der inneren Kunststoffwasserführung beabstandet. Die zumindest eine Rippe kann insbesondere auf der ersten inneren Umfangsfläche der äußeren Kunststoffwasserführung und/oder auf der zweiten äußeren Umfangsfläche der inneren Kunststoffwasserführung ausgebildet sein. Die zumindest eine Rippe kann sich insbesondere parallel zu der Längsachse erstrecken. Die innere Kunststoffwasserführung und/oder die äußere Kunststoffwasserführung können eine Mehrzahl von Rippen aufweisen, die (insbesondere in einer Umfangsrichtung und/oder um die Längsachse) voneinander beabstandet sein können.

Der erste Mischwasserabgang und der zweite Mischwasserabgang können in einer gemeinsamen Ebene ausgebildet sein. Dies kann insbesondere bedeuten, dass der erste Mischwasserabgang und der zweite Mischwasserabgang entlang der Längsachse nicht versetzt zueinander ausgebildet sind. Insbesondere können eine erste Zentrumsachse des ersten Mischwasserabgangs und eine zweite Zentrumsachse des zweiten Mischwasserabgangs in der gemeinsamen Ebene liegen. Die Ebene kann insbesondere senkrecht zu der Längsachse verlaufen.

Die innere Kunststoffwasserführung und/oder die äußere Kunststoffwasserführung können einen ersten ringförmigen Ansatz zur zumindest teilweisen Ausbildung des ersten Mischwasserabgangs aufweisen. Die innere Kunststoffwasserführung und/oder die äußere Kunststoffwasserführung können einen zweiten ringförmigen Ansatz zur zumindest teilweisen Ausbildung des zweiten Mischwasserabgangs aufweisen. Der erste ringförmige Ansatz und/oder der zweite ringförmige Ansatz können rohrförmig ausgebildet sein. Der erste ringförmige Ansatz und/oder der zweite ringförmige Ansatz können an der ersten inneren Umfangsfläche der äußeren Kunststoffwasserführung und/oder der zweiten äußeren Umfangsfläche der inneren Kunststoffwasserführung ausgebildet sein. Der erste ringförmige Ansatz und/oder der zweite ringförmige Ansatz können sich durch den zumindest einen Warmwasserkanal erstrecken.

Einem weiteren Aspekt folgend wird auch eine Mischarmatur angegeben, die zumindest Folgendes aufweist:
- ein Armaturengehäuse mit einem Warmwasserzulauf für Warmwasser und einem Kaltwasserzulauf für Kaltwasser;
- ein Mischventil zum Mischen des Warmwassers und des Kaltwassers zu einem Mischwasser; und
- eine erfindungsgemäße Kunststoffwasserführung, wobei das Warmwasser dem Mischventil durch die Kunststoffwasserführung ohne Kontakt zu dem Armaturengehäuse zuführbar ist.

Für weitere Einzelheiten zu der Mischarmatur wird vollumfänglich auf die Beschreibung der Kunststoffwasserführung verwiesen.

Einem noch weiteren Aspekt folgend wird auch ein Verfahren zur Herstellung einer erfindungsgemäßen Kunststoffwasserführung vorgeschlagen, das zumindest die folgenden Schritte aufweist:
a) Bereitstellen einer rohrförmigen äußeren Kunststoffwasserführung, die sich entlang einer Längsachse erstreckt;
b) Anordnen einer rohrförmigen inneren Kunststoffwasserführung zumindest teilweise in der äußeren Kunststoffwasserführung, sodass zwischen der inneren Kunststoffwasserführung und der äußeren Kunststoffwasserführung zumindest ein Warmwasserkanal ausgebildet ist; und
c) Erzeugen zumindest einer Überspritzung in zumindest einem Mischwasserabgang, der sich durch die innere Kunststoffwasserführung und die äußere Kunststoffwasserführung erstreckt.

Die Schritte a), b) und c) können zumindest teilweise gleichzeitig, zeitlich überlappend oder nacheinander ausgeführt werden.

Das Erzeugen der zumindest einen Überspritzung in Schritt c) kann insbesondere durch ein Spritzgussverfahren, wie zum Beispiel "Overmolding", bzw. mithilfe einer Spritzgussmaschine erfolgen.

Für weitere Einzelheiten zu dem Verfahren wird vollumfänglich auf die Beschreibung der Kunststoffwasserführung verwiesen.

Die Erfindung sowie das technische Umfeld werden nachfolgend anhand der Figuren näher erläutert. Es ist darauf hinzuweisen, dass die Figuren besonders bevorzugte Ausführungsvarianten der Erfindung zeigen, diese jedoch nicht darauf beschränkt ist. Dabei sind gleiche Bauteile in den Figuren mit denselben Bezugszeichen versehen. Es zeigen beispielhaft und schematisch:
- Fig. 1:: eine erste Variante einer Mischarmatur in einem Längsschnitt;
- Fig. 2:: eine Kunststoffwasserführung der ersten Variante der Mischarmatur in einem Längsschnitt;
- Fig. 3:: die erste Variante der Mischarmatur mit der Kunststoffwasserführung in einer Schnittdarstellung;
- Fig. 4:: eine zweite Variante der Mischarmatur mit der Kunststoffwasserführung in der Schnittdarstellung; und
- Fig. 5:: die Kunststoffwasserführung in einer Schnittdarstellung.

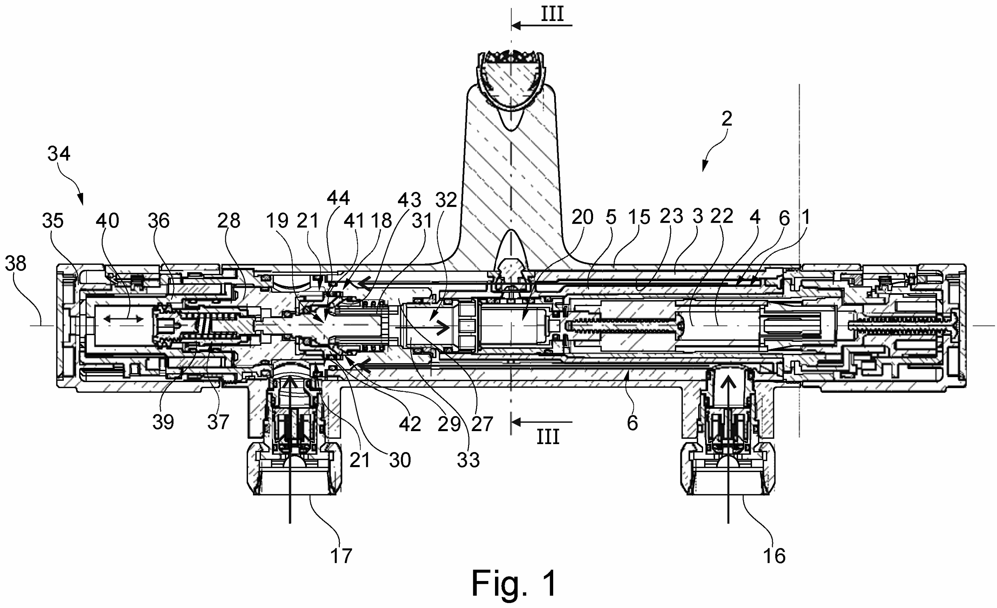

Die Fig. 1 zeigt eine erste Variante einer Mischarmatur 2 in einem Längsschnitt. Die Mischarmatur 2 umfasst ein Armaturengehäuse 15 mit einem Warmwasserzulauf 16 für Warmwasser und einem Kaltwasserzulauf 17 für Kaltwasser. In dem Armaturengehäuse 15 ist ein Mischventil 18 nach Art eines Thermostatmischers bzw. einer Thermostatmischkartusche angeordnet. Der Warmwasserzulauf 16 ist über Warmwasserkanäle 6 und der Kaltwasserzulauf 17 über einen Kaltwasserkanal 21 mit dem Mischventil 18 verbunden, sodass das Warmwasser dem Mischventil 18 über die Warmwasserkanäle 6 und das Kaltwasser dem Mischventil 18 über den Kaltwasserkanal 21 zuführbar sind. Die Strömungsrichtungen des Warmwassers in den Warmwasserkanälen 6 und des Kaltwassers in dem Kaltwasserkanal 21 sind in der Fig. 1 durch entsprechende Pfeile dargestellt. Der Kaltwasserkanal 21 erstreckt sich ringförmig um das Mischventil 18. Das Mischventil 18 ist konzentrisch zu einer Gehäuselängsachse 22 des Armaturengehäuses 15 angeordnet.

In dem Armaturengehäuse 15 ist eine Kunststoffwasserführung 1 mit einer rohrförmigen äußeren Kunststoffwasserführung 3 und einer rohrförmigen inneren Kunststoffwasserführung 5 angeordnet. Die Kunststoffwasserführung 1 bzw. die äußere Kunststoffwasserführung 3 und die innere Kunststoffwasserführung 5 erstrecken sich entlang einer Längsachse 4, die parallel bzw. koaxial zu der Gehäuselängsachse 22 des Armaturengehäuses 15 verläuft. Die innere Kunststoffwasserführung 5 ist in der äußeren Kunststoffwasserführung 3 angeordnet, sodass zwischen der inneren Kunststoffwasserführung 5 und der äußeren Kunststoffwasserführung 3 die Warmwasserkanäle 6 ausgebildet sind. Die Warmwasserkanäle 6 verlaufen (im Wesentlichen) parallel zu der Längsachse 4 der Kunststoffwasserführung 1 und der Gehäuselängsachse 22 des Armaturengehäuses 15.

Durch das Mischventil 18 sind das Warmwasser und das Kaltwasser zu einem Mischwasser mit einer Mischwassertemperatur mischbar. Das Mischventil 18 weist ein Kartuschengehäuse 27 mit einem Kartuschenkopfstück 28 auf, das (im Wesentlichen) rohrförmig ausgebildet ist und sich entlang der Gehäuselängsachse 22 des Mischventils 18 bzw. des Armaturengehäuses 15 erstreckt. In dem Kartuschenkopfstück 28 ist zumindest ein erster Einlass 29 für das Warmwasser und zumindest ein zweiter Einlass 30 für das Kaltwasser ausgebildet. Die hier gezeigte Variante des Mischventils 18 weist eine Mehrzahl von ersten Einlässen 29 und zweiten Einlässen 30 auf, die in einer Umfangsrichtung um die Gehäuselängsachse 22 in dem Kartuschenkopfstück 28 verteilt angeordnet sind. Über die ersten Einlässe 29 ist das Warmwasser und über die die zweiten Einlässe 30 das Kaltwasser in eine Mischkammer 31 des Mischventils 18 führbar. Somit ist die Mischkammer 31 den ersten Einlässen 29 und zweiten Einlässen 30 in einer Strömungsrichtung des Warmwassers und des Kaltwassers nachgeordnet. In der Mischkammer 31 sind das Warmwasser und das Kaltwasser zu dem Mischwasser mischbar. Der Mischkammer 31 ist in Strömungsrichtung des Mischwassers ein Mischwasserauslass 32 nachgeordnet, durch den das Mischwasser das Mischventil 18 verlassen kann. Das Mischventil 18 erstreckt sich mit dem Mischwasserauslass 32 über ein erstes längsseitiges Ende 19 der äußeren Kunststoffwasserführung 3 in die Kunststoffwasserführung 1 bzw. in die äußere Kunststoffwasserführung 3. Von dem Mischwasserauslass 32 ist das Mischwasser über einen Mischwasserkanal 33 der Kunststoffwasserführung 1 einem Ventil 20 zuführbar, mit dem eine Abgabe des Mischwassers aus der Mischarmatur 2 steuerbar ist. Der Mischwasserkanal 33 erstreckt sich parallel bzw. koaxial zu der Gehäuselängsachse 22 des Armaturengehäuses 15 und parallel bzw. koaxial zu der Längsachse 4 der Kunststoffwasserführung 1 durch die Kunststoffwasserführung 1. Ein Strömungsverlauf des Mischwassers ist in der Fig. 1 mit einem entsprechenden Pfeil dargestellt.

Die Mischwassertemperatur des Mischwassers wird durch ein Mischungsverhältnis zwischen dem Warmwasser und dem Kaltwasser bestimmt. Zur Einstellung der Mischwassertemperatur weist das Mischventil 18 ein Stellelement 34 auf. Das Stellelement 34 umfasst einen Betätigungsgriff 35, der verdrehfest mit einer Reguliermutter 36 einer Überlasteinheit 37 verbunden ist. Der Betätigungsgriff 35 ist somit mit der Reguliermutter 36 um eine Drehachse 38 drehbar, die hier mit der Gehäuselängsachse 22 und Längsachse 4 fluchtet. Beim Drehen des Betätigungsgriffs 35 wird eine Federhülse 39 in einer axialen Richtung 40, d. h. parallel zu der Gehäuselängsachse 22 und der Längsachse 4, verstellt. Die Bewegung der Federhülse 39 in die axiale Richtung 40 wird auf ein Regelelement 41 übertragen, das wiederum einen Regelschieber 42 in der axialen Richtung 40 bewegt. Je nach Position des Regelschiebers 42 in der axialen Richtung 40 kann der Regelschieber 42 einen ersten Regelspalt 43 für das Warmwasser und einen zweiten Regelspalt 44 für das Kaltwasser wechselweise öffnen und schließen. Je nach Position des Regelschiebers 42 wird eine entsprechende Menge des Warmwassers und Kaltwassers in das Mischventil 18 durch den ersten Regelspalt 43 und den zweiten Regelspalt 44 geleitet, woraus das Mischwasser mit einer entsprechenden Mischwassertemperatur gemischt wird. Das Regelelement 41 kann zumindest teilweise aus einem Wärmeausdehnungsmaterial bestehen. Hierdurch dehnt sich das Regelelement 41 insbesondere in der axiale Richtung 40 aus, wenn es erwärmt wird, und zieht sich insbesondere in der axialen Richtung 40 zusammen, wenn es abgekühlt wird. Dadurch kann das Regelelement 41 die Mischwassertemperatur des Mischwassers (im Wesentlichen) konstant halten. Strömt beispielsweise zu viel des Warmwassers und/oder zu wenig des Kaltwassers in das Mischventil 18, erwärmt und dehnt sich das Regelelement 41 aus, wodurch es den Regelschieber 42 in der axialen Richtung 40 in Richtung des Mischwasserauslasses 21 verstellt, sodass der erste Regelspalt 43 verkleinert und der zweite Regelspalt 44 vergrößert werden. Somit strömt weniger Warmwasser und mehr Kaltwasser in die Mischkammer 31. Strömt beispielsweise zu viel Kaltwasser und/oder zu wenig Warmwasser in das Mischventil 18, zieht sich das Regelelement 41 zusammen, wodurch es den Regelschieber 42 vom Mischwasserauslass 32 wegbewegt, sodass der erste Regelspalt 43 vergrößert und der zweite Regelspalt 44 verkleinert wird. Somit strömt mehr Warmwasser und weniger Kaltwasser in die Mischkammer 31.

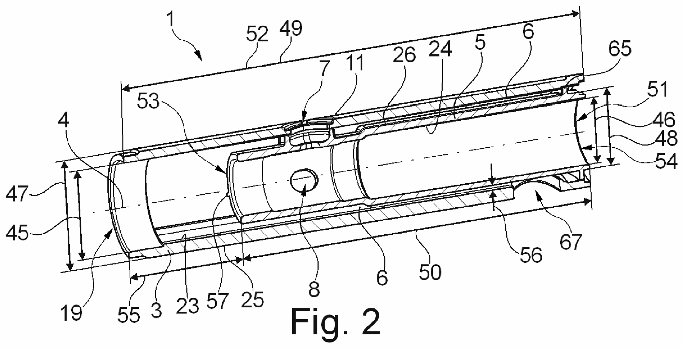

Die Fig. 2 zeigt die Kunststoffwasserführung 1 der in der Fig. 1 gezeigten ersten Variante der Mischarmatur 2 in einem Längsschnitt. Die äußere Kunststoffwasserführung 3 weist eine erste innere Umfangsfläche 23 und eine erste äußere Umfangsfläche 25 auf. Die innere Kunststoffwasserführung 5 weist eine zweite innere Umfangsfläche 24 und eine zweite äußere Umfangsfläche 26 auf. Die äußere Kunststoffwasserführung 3 weist einen ersten Innendurchmesser 45 und einen ersten Außendurchmesser 47 auf. Die innere Kunststoffwasserführung 3 weist einen zweiten Innendurchmesser 46 und einen zweiten Außendurchmesser 48 auf. Der erste Innendurchmesser 45 der äußeren Kunststoffwasserführung 3 ist größer als der zweite Außendurchmesser 48 der inneren Kunststoffwasserführung 5, sodass die Warmwasserkanäle 6 zwischen der ersten inneren Umfangsfläche 23 der äußeren Kunststoffwasserführung 3 und der zweiten äußeren Umfangsfläche 26 der inneren Kunststoffwasserführung 5 ausgebildet sind bzw. sodass die Warmwasserkanäle 6 durch die erste innere Umfangsfläche 23 der äußeren Kunststoffwasserführung 3 und die zweite äußere Umfangsfläche 26 der inneren Kunststoffwasserführung 5 begrenzt werden. Die äußere Kunststoffwasserführung 3 weist einen Warmwassereinlass 67 auf, über den das Warmwasser den Warmwasserkanälen 6 zuführbar ist. Der Warmwassereinlass 67 ist nach Art einer Bohrung bzw. einer Öffnung ausgebildet, die sich orthogonal zu der Längsachse 4 von der ersten äußeren Umfangsfläche 25 zu der ersten inneren Umfangsfläche 23 der äußeren Kunststoffwasserführung 3 erstreckt. Die innere Kunststoffwasserführung 5 weist an ihrer zweiten äußeren Umfangsfläche 26 einen umlaufenden bzw. ringförmigen Steg 65 auf, der sich von der zweiten äußeren Umfangsfläche 26 orthogonal zu der Längsachse bis zu der ersten inneren Umfangsfläche 23 der äußeren Kunststoffwasserführung 3 erstreckt. Der Steg 65 dichtet die Warmwasserkanäle 6 in Richtung des zweiten längsseitigen Endes 51 der äußeren Kunststoffwasserführung 3 bzw. des vierten längsseitigen Endes 54 der inneren Kunststoffwasserführung 5 ab, sodass das Warmwasser an dem zweiten längsseitigen Ende 51 der äußeren Kunststoffwasserführung 3 bzw. dem vierten längsseitigen Ende 54 der inneren Kunststoffwasserführung 5 nicht aus der Kunststoffwasserführung 1 strömen kann.

Die innere Kunststoffwasserführung 5 weist an ihrer zweiten äußeren Umfangsfläche 26 eine Mehrzahl von Rippen 57 auf, von denen in der Fig. 2 lediglich eine zu erkennen ist. Die Rippen 57 erstrecken sich parallel zu der Längsachse 4 und orthogonal zu der Längsachse 4 bis zu der ersten inneren Umfangsfläche 23 der äußeren Kunststoffwasserführung 3. Die Rippen 57 zentrieren die innere Kunststoffwasserführung 5 in der äußeren Kunststoffwasserführung 3. Die Warmwasserkanäle 6 weisen (orthogonal zu der Längsachse 4) eine Spaltbreite 56 auf.

Die äußere Kunststoffwasserführung 3 und die innere Kunststoffwasserführung 5 erstrecken sich koaxial zu der Längsachse 4. Die äußere Kunststoffwasserführung 3 weist parallel zu der Längsachse 4 eine erste Länge 49 auf, die sich von dem ersten längsseitigen Ende 19 zu einem zweiten längsseitigen Ende 51 der äußeren Kunststoffwasserführung 3 erstreckt. Eine Gesamtlänge 52 der Kunststoffwasserführung 1 entspricht (parallel zu der Längsachse 4) der ersten Länge 49 der äußeren Kunststoffwasserführung 3. Die innere Kunststoffwasserführung 5 weist parallel zu der Längsachse 4 eine zweite Länge 50 auf, die sich von einem dritten längsseitigen Ende 53 der inneren Kunststoffwasserführung 5 zu einem vierten längsseitigen Ende 54 der inneren Kunststoffwasserführung 5 erstreckt. Die äußere Kunststoffwasserführung 3 schließt mit ihrem zweiten längsseitigen Ende 51 bündig mit dem vierten längsseitigen Ende 54 der inneren Kunststoffwasserführung 5 ab. Die zweite Länge 50 der inneren Kunststoffwasserführung 5 ist kürzer als die erste Länge 49 der äußeren Kunststoffwasserführung 3. Das dritte längsseitige Ende 53 der inneren Kunststoffwasserführung 5 weist einen Abstand 55 zu dem ersten längsseitigen Ende 19 der äußeren Kunststoffwasserführung 3 auf.

Die Kunststoffwasserführung 1 weist einen ersten Mischwasserabgang 7 und einen zweiten Mischwasserabgang 8 auf. Die Mischwasserabgänge 7, 8 erstrecken sich orthogonal zu der Längsachse durch die äußere Kunststoffwasserführung 3 und innere Kunststoffwasserführung 5.

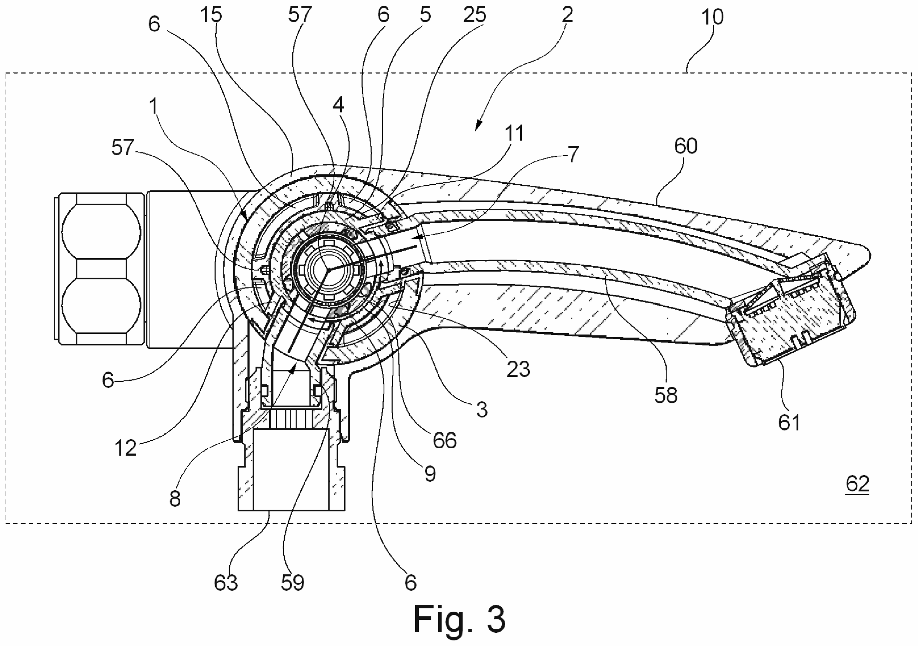

Die Fig. 3 zeigt die erste Variante der Mischarmatur 2 in einer Schnittdarstellung entlang der in der Fig. 1 gezeigten Schnittlinie III-III. Zu erkennen ist in der Fig. 3, dass der erste Mischwasserabgang 7 und der zweite Mischwasserabgang 8 der Kunststoffwasserführung 1 parallel zu der Längsachse 4 in einer gemeinsamen Ebene 10 liegen. Der erste Mischwasserabgang 7 und der zweite Mischwasserabgang 8 sind um die Längsachse 4 mit einem Winkel 9 versetzt zueinander ausgebildet. Die innere Kunststoffwasserführung 5 weist an ihrer zweiten äußeren Umfangsfläche 26 einen ersten ringförmigen Ansatz 11 auf, der sich von der zweiten äußeren Umfangsfläche 26 der inneren Kunststoffwasserführung 5 orthogonal zu der Längsachse 4 zu der ersten inneren Umfangsfläche 23 der äußeren Kunststoffwasserführung 3 erstreckt und der den ersten Mischwasserabgang 7 teilweise bildet (vgl. Fig. 2). Die innere Kunststoffwasserführung 5 weist an ihrer zweiten äußeren Umfangsfläche 26 einen zweiten ringförmigen Ansatz 12 auf, der sich von der zweiten äußeren Umfangsfläche 26 der inneren Kunststoffwasserführung 5 orthogonal zu der Längsachse 4 zu der ersten inneren Umfangsfläche 23 der äußeren Kunststoffwasserführung 3 erstreckt und der den zweiten Mischwasserabgang 8 teilweise bildet. Die Warmwasserkanäle 6 sind in einer Umfangsrichtung der Kunststoffwasserführung 1 zwischen den Rippen 57 ausgebildet.

In den ersten Mischwasserabgang 7 ist ein erstes Kunststoffrohr 58 gesteckt, mit dem das Mischwasser durch einen Auslauf 60 des Armaturengehäuses 15 einer Auslauföffnung 61 des Auslaufs 60 zuführbar ist. Über die Auslauföffnung 61 ist das Mischwasser an eine Umgebung 62 der Mischarmatur 2 abgebbar. In den zweiten Mischwasserabgang 8 ist ein zweites Kunststoffrohr 59 gesteckt, mit dem das Mischwasser einem ersten Mischwasserablauf 63 der Mischarmatur 2 bzw. des Armaturengehäuses 15 zuführbar ist. An den ersten Mischwasserablauf 63 ist beispielsweise ein hier nicht gezeigter Verbindungsschlauch anschließbar, über den das Mischwasser einer hier ebenfalls nicht gezeigten Handbrause zuführbar ist.

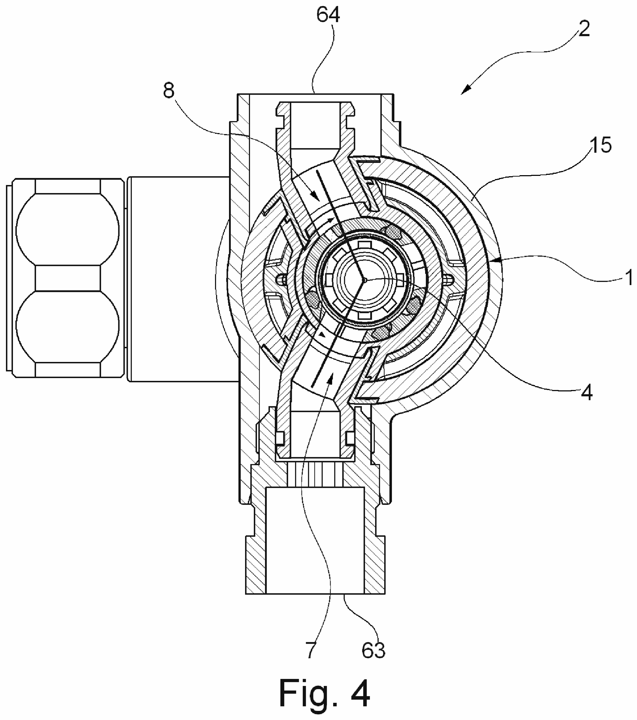

Die Fig. 4 zeigt eine zweite Variante der Mischarmatur 2 in der Schnittdarstellung. Die zweite Variante der Mischarmatur 2 unterscheidet sich von der in den Fig. 1 und 2 gezeigten ersten Variante der Mischarmatur 2 lediglich dadurch, dass die Mischarmatur 2 bzw. das Armaturengehäuse 15 neben dem ersten Mischwasserablauf 63 einen zweiten Mischwasserablauf 64 statt dem in der Fig. 3 gezeigten Auslauf 60 aufweist. Der erste Mischwasserablauf 63 und der zweite Mischwasserablauf 64 liegen sich gegenüber. An den zweiten Mischwasserablauf 64 ist beispielsweise ein hier nicht gezeigtes Verbindungsrohr anschließbar, über das das Mischwasser einer hier ebenfalls nicht gezeigten Kopfbrause zuführbar ist. Die zweite Variante der Mischarmatur 2 ist im Übrigen identisch zu der in der Fig. 1 gezeigten ersten Variante der Mischarmatur 2 ausgebildet. In dem Armaturengehäuse 15 ist insbesondere die gleiche Kunststoffwasserführung 1 angeordnet, wie in dem Armaturengehäuse 15 der ersten Variante der Mischarmatur 2. Im Vergleich zur Fig. 3 ist die Kunststoffwasserführung 1 in der Fig. 4 bzw. in dem Armaturengehäuse 15 der zweiten Variante der Mischarmatur 2 lediglich um die Längsachse 4 gedreht, sodass das Mischwasser über den ersten Mischwasserabgang 7 dem ersten Mischwasserablauf 63 und über den zweiten Mischwasserabgang 8 dem zweiten Mischwasserablauf 64 zuführbar ist.

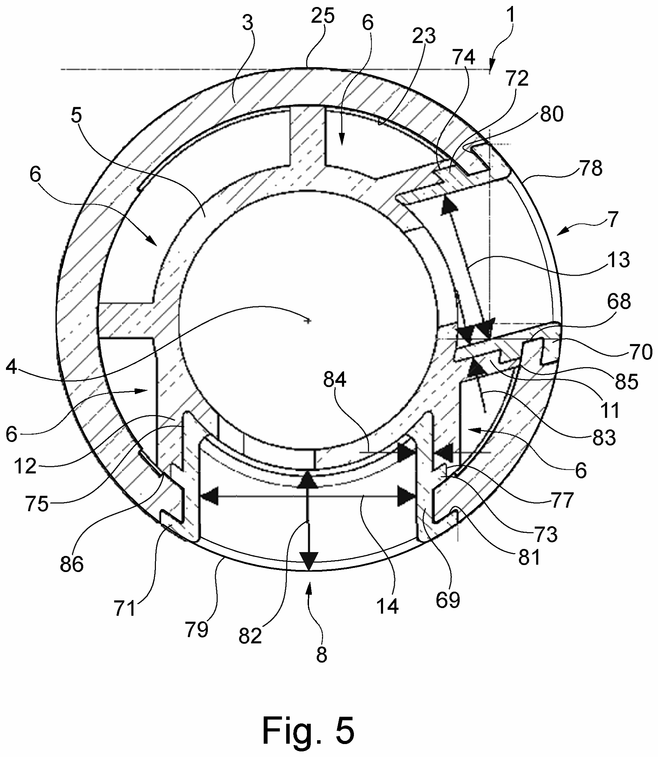

Die Fig. 5 zeigt die Kunststoffwasserführung 1 in einer Schnittdarstellung entlang der in der Fig. 1 gezeigten Schnittlinie III-III. Zu erkennen ist in der Fig. 5, dass der erste Mischwasserabgang 7 eine erste Überspritzung 68 und der zweite Mischwasserabgang 8 eine zweite Überspritzung 69 aufweisen. Die Überspritzungen 68, 69 sind hülsenförmig ausgebildet und weisen an ihren Außenflächen 74, 75 jeweils eine Verbindungstruktur 72, 73 auf, die nach Art von umlaufenden Stegen ausgebildet sind. Die Verbindungstrukturen 72, 73 greifen in Nuten 76, 77 der ringförmigen Ansätze 11, 12 der inneren Kunststoffwasserführung 5 ein und kontaktieren die erste innere Umfangsfläche 23 der äußeren Kunststoffwasserführung 3. Die Überspritzungen 68, 69 weisen an ihren äußeren längsseitigen Enden 78, 79 jeweils einen umlaufenden Kragen 70, 71 auf, die sich in (umlaufende) Vertiefungen 80, 81 der ersten äußeren Umfangsfläche 25 der äußeren Kunststoffwasserführung 3 erstrecken. Die äußeren längsseitigen Enden 78, 79 der Überspritzungen 68, 69 bzw. die umlaufenden Kragen 70, 71 der Überspritzungen 68, 69 schließen bündig mit der ersten äußeren Umfangsfläche 25 der äußeren Kunststoffwasserführung 3 ab.

Der erste Mischwasserabgang 7 bzw. die erste Überspritzung 68 weist einen ersten Durchmesser 13 und der zweite Mischwasserabgang 8 bzw. die zweite Überspritzung 69 einen zweiten Durchmesser 14 auf. Die Überspritzungen 68, 69 erstrecken sich (orthogonal zu der Längsachse 4) von der ersten äußeren Umfangsfläche 25 der äußeren Kunststoffwasserführung 3 bis zu der zweiten äußeren Umfangsfläche 26 der inneren Kunststoffwasserführung 5. Die Überspritzungen 68, 69 weisen jeweils eine Schichtdicke 83, 84 auf. Die Überspritzungen 68, 69 sind stoffschlüssig mit der äußeren Kunststoffwasserführung 3 und der inneren Kunststoffwasserführung 5 verbunden und erstrecken sich jeweils über eine Fuge 85, 86 zwischen der ersten inneren Umfangsfläche 23 der äußeren Kunststoffwasserführung 3 und den ringförmigen Ansätzen 11, 12 der inneren Kunststoffwasserführung 5, sodass aus den Mischwasserabgängen 7, 8 kein Mischwasser durch die Fugen 85, 86 in die Warmwasserkanäle 6 eintreten kann.

Durch die vorliegende Erfindung ist eine Anzahl erforderlicher Dichtungen reduzierbar.

### Bezugszeichenliste

- 1: Kunststoffwasserführung
- 2: Mischarmatur
- 3: äußere Kunststoffwasserführung
- 4: Längsachse
- 5: innere Kunststoffwasserführung
- 6: Warmwasserkanal
- 7: erster Mischwasserabgang
- 8: zweiter Mischwasserabgang
- 9: Winkel
- 10: Ebene
- 11: erster ringförmiger Ansatz
- 12: zweiter ringförmiger Ansatz
- 13: erster Durchmesser
- 14: zweiter Durchmesser
- 15: Armaturengehäuse
- 16: Warmwasserzulauf
- 17: Kaltwasserzulauf
- 18: Mischventil
- 19: erstes längsseitiges Ende
- 20: Ventil
- 21: Kaltwasserkanal
- 22: Gehäuselängsachse
- 23: erste innere Umfangsfläche
- 24: zweite innere Umfangsfläche
- 25: erste äußere Umfangsfläche
- 26: zweite äußere Umfangsfläche
- 27: Kartuschengehäuse
- 28: Kartuschenkopfstück
- 29: erster Einlass
- 30: zweiter Einlass
- 31: Mischkammer
- 32: Mischwasserauslass
- 33: Mischwasserkanal
- 34: Stellelement
- 35: Betätigungsgriff
- 36: Reguliermutter
- 37: Überlasteinheit
- 38: Drehachse
- 39: Federhülse
- 40: axiale Richtung
- 41: Regelelement
- 42: Regelschieber
- 43: erster Regelspalte
- 44: zweiter Regelspalte
- 45: erster Innendurchmesser
- 46: zweiter Innendurchmesser
- 47: erster Außendurchmesser
- 48: zweiter Außendurchmesser
- 49: erste Länge
- 50: zweite Länge
- 51: zweites längsseitiges Ende
- 52: Gesamtlänge
- 53: drittes längsseitiges Ende
- 54: vierte längsseitiges Ende
- 55: Abstand
- 56: Spaltbreite
- 57: Rippe
- 58: erstes Kunststoffrohr
- 59: zweites Kunststoffrohr
- 60: Auslauf
- 61: Auslauföffnung
- 62: Umgebung
- 63: erster Mischwasserablauf
- 64: zweiter Mischwasserablauf
- 65: Steg
- 66: Umfangsrichtung
- 67: Warmwassereinlass
- 68: erste Überspritzung
- 69: zweite Überspritzung
- 70: erster umlaufender Kragen
- 71: zweiter umlaufender Kragen
- 72: erste Verbindungsstruktur
- 73: zweite Verbindungstruktur
- 74: erste Außenfläche
- 75: zweite Außenfläche
- 76: erste Nut
- 77: zweite Nut
- 78: erstes äußeres längsseitiges Ende
- 79: zweites äußeres längsseitiges Ende
- 80: erste Vertiefung
- 81: zweite Vertiefungen
- 82: Umfangsflächenabstand
- 83: erste Schichtdicke
- 84: zweite Schichtdicke
- 85: erste Fuge
- 86: zweite Fuge

## Patentansprüche

1. Kunststoffwasserführung (1) für eine Mischarmatur (2), zumindest aufweisend:
- eine rohrförmige äußere Kunststoffwasserführung (3), die sich entlang einer Längsachse (4) erstreckt;
- eine rohrförmige innere Kunststoffwasserführung (5), die sich entlang der Längsachse (4) erstreckt und zumindest teilweise in der äußeren Kunststoffwasserführung (3) angeordnet ist, sodass zwischen der inneren Kunststoffwasserführung (5) und der äußeren Kunststoffwasserführung (3) zumindest ein Warmwasserkanal (6) ausgebildet ist; und
- zumindest einen Mischwasserabgang (7, 8),
**dadurch gekennzeichnet, dass**
sich der zumindest eine Mischwasserabgang (7, 8) durch die innere Kunststoffwasserführung (5) und die äußere Kunststoffwasserführung (3) erstreckt, wobei der zumindest eine Mischwasserabgang (7, 8) zumindest teilweise eine Überspritzung (68, 69) aus Kunststoff aufweist, wobei die Überspritzung (68, 69) durch zumindest teilweises Überspritzen einer Innenfläche des zumindest einen Mischwasserabgangs (7, 8) erzeugt ist, sodass die Überspritzung (68, 69) den zumindest einen Mischwasserabgang (7, 8) abdichtet.

2. Kunststoffwasserführung (1) nach Patentanspruch 1, wobei die Überspritzung (68, 69) zumindest teilweise hülsenförmig ausgebildet ist.

3. Kunststoffwasserführung (1) nach einem der vorhergehenden Patentansprüche, wobei sich die Überspritzung (68, 69) von einer ersten äußeren Umfangsfläche (25) der äußeren Kunststoffwasserführung (3) bis zu einer zweiten äußeren Umfangsfläche (26) der inneren Kunststoffwasserführung (5) erstreckt.

4. Kunststoffwasserführung (1) nach einem der vorhergehenden Patentansprüche, wobei die Überspritzung (68, 69) im Bereich einer ersten äußeren Umfangsfläche (25) der äußeren Kunststoffwasserführung (5) einen umlaufenden Kragen (70, 71) aufweist.

5. Kunststoffwasserführung (1) nach einem der vorhergehenden Patentansprüche, wobei die Überspritzung (68, 69) zumindest eine Verbindungsstruktur (72, 73) aufweist, mit der die Überspritzung (68, 69) formschlüssig an der äußeren Kunststoffwasserführung (3) oder der inneren Kunststoffwasserführung (5) befestigt ist.

6. Kunststoffwasserführung (1) nach Patentanspruch 5, wobei die zumindest eine Verbindungsstruktur (72, 73) nach Art eines umlaufenden Stegs ausgebildet ist.

7. Kunststoffwasserführung (1) nach einem der vorhergehenden Patentansprüche, wobei die Überspritzung (68, 69) zumindest teilweise aus einem gleichen Material wie die äußere Kunststoffwasserführung (3) oder die innere Kunststoffwasserführung (5) besteht.

8. Kunststoffwasserführung (1) nach einem der vorhergehenden Patentansprüche, wobei sich der zumindest eine Mischwasserabgang (7, 8) zumindest teilweise durch den zumindest einen Warmwasserkanal (6) erstreckt.

9. Kunststoffwasserführung (1) nach einem der vorhergehenden Patentansprüche, aufweisend:
- einen ersten Mischwasserabgang (7), der sich durch die innere Kunststoffwasserführung (5) und die äußere Kunststoffwasserführung (3) erstreckt; und
- einen zweiten Mischwasserabgang (8), der sich durch die innere Kunststoffwasserführung (5) und die äußere Kunststoffwasserführung (3) erstreckt, wobei der erste Mischwasserabgang (7) und der zweite Mischwasserabgang (8) um die Längsachse (4) mit einem Winkel (9) von 100° bis 140° versetzt zueinander ausgebildet sind.

10. Mischarmatur (2), zumindest aufweisend:
- ein Armaturengehäuse (15) mit einem Warmwasserzulauf (16) für Warmwasser und einem Kaltwasserzulauf (17) für Kaltwasser;
- ein Mischventil (18) zum Mischen des Warmwassers und des Kaltwassers zu einem Mischwasser; und
- eine Kunststoffwasserführung (1) nach einem der vorhergehenden Patentansprüche, wobei das Warmwasser dem Mischventil (18) durch die Kunststoffwasserführung (1) ohne Kontakt zu dem Armaturengehäuse (15) zuführbar ist.

11. Verfahren zur Herstellung einer Kunststoffwasserführung (1) nach einem der Patentansprüche 1 bis 9, zumindest aufweisend die folgenden Schritte:
a) Bereitstellen einer rohrförmigen äußeren Kunststoffwasserführung (3), die sich entlang einer Längsachse (4) erstreckt;
b) Anordnen einer rohrförmigen inneren Kunststoffwasserführung (5) zumindest teilweise in der äußeren Kunststoffwasserführung (3), sodass zwischen der inneren Kunststoffwasserführung (5) und der äußeren Kunststoffwasserführung (3) zumindest ein Warmwasserkanal (6) ausgebildet ist; und
c) Erzeugen zumindest einer Überspritzung (68, 69) in zumindest einem Mischwasserabgang (7, 8), der sich durch die innere Kunststoffwasserführung (5) und die äußere Kunststoffwasserführung (3) erstreckt, wobei die Überspritzung (68, 69) durch zumindest teilweises Überspritzen einer Innenfläche des zumindest einen Mischwasserabgangs (7, 8) erzeugt wird, sodass die Überspritzung (68, 69) den zumindest einen Mischwasserabgang (7, 8) abdichtet.

## Claims

1. A plastic water duct (1) for a mixing faucet (2), at least comprising:
- a tubular outer plastic water duct (3) that extends along a longitudinal axis (4);
- a tubular inner plastic water duct (5) that extends along the longitudinal axis (4) and is arranged, at least in part, in the outer plastic water duct (3) such that at least one hot water channel (6) is formed between the inner plastic water duct (5) and the outer plastic water duct (3); and
- at least one mixed water outlet (7, 8),
**characterized in that**
the at least one mixed water outlet (7, 8) extends through the inner plastic water duct (5) and the outer plastic water duct (3), wherein the at least one mixed water outlet (7, 8) comprises, at least in part, a plastic overmolding (68, 69), wherein the overmolding (68, 69) is created by at least partially overmolding an inner surface of the at least one mixed water outlet (7, 8) such that the overmolding (68, 69) seals the at least one mixed water outlet (7, 8).

2. The plastic water duct (1) according to claim 1, wherein the overmolding (68, 69) is designed to be at least partially sleeve-shaped.

3. The plastic water duct (1) according to any one of the preceding claims, wherein the overmolding (68, 69) extends from a first outer circumferential surface (25) of the outer plastic water duct (3) to a second outer circumferential surface (26) of the inner plastic water duct (5).

4. The plastic water duct (1) according to any one of the preceding claims, wherein the overmolding (68, 69) comprises a circumferential collar (70, 71) in the region of a first outer circumferential surface (25) of the outer plastic water duct (3).

5. The plastic water duct (1) according to any one of the preceding claims, wherein the overmolding (68, 69) comprises at least one connecting structure (72, 73) by means of which the overmolding (68, 69) is positively secured to the outer plastic water duct (3) or the inner plastic water duct (5).

6. The plastic water duct (1) according to claim 5, wherein the at least one connecting structure (72, 73) is designed as a circumferential web.

7. The plastic water duct (1) according to any one of the preceding claims, wherein the overmolding (68, 69) consists at least in part of the same material as the outer plastic water duct (3) or the inner plastic water duct (5).

8. The plastic water duct (1) according to any one of the preceding claims, wherein the at least one mixed water outlet (7, 8) extends at least in part through the at least one hot water channel (6).

9. The plastic water duct (1) according to any one of the preceding claims, comprising:
- a first mixed water outlet (7) that extends through the inner plastic water duct (5) and the outer plastic water duct (3); and
- a second mixed water outlet (8) that extends through the inner plastic water duct (5) and the outer plastic water duct (3), wherein the first mixed water outlet (7) and the second mixed water outlet (8) are designed to be offset from one another around the longitudinal axis (4) at an angle (9) of 100° to 140°.

10. A mixing faucet (2), at least comprising:
- a faucet housing (15) with a hot water inlet (16) for hot water and a cold water inlet (17) for cold water;
- a mixing valve (18) for mixing the hot water and the cold water to form mixed water; and
- a plastic water duct (1) according to any one of the preceding claims, wherein the hot water can be supplied to the mixing valve (18) through the plastic water duct (1) without coming into contact with the faucet housing (15).

11. A method for manufacturing a plastic water duct (1) according to any one of claims 1 to 9, comprising at least the following steps:
a) providing a tubular outer plastic water duct (3) that extends along a longitudinal axis (4);
b) arranging a tubular inner plastic water duct (5), at least in part, in the outer plastic water duct (3) such that at least one hot water channel (6) is formed between the inner plastic water duct (5) and the outer plastic water duct (3); and
c) creating at least one overmolding (68, 69) in at least one mixed water outlet (7, 8) that extends through the inner plastic water duct (5) and the outer plastic water duct (3), wherein the overmolding (68, 69) is created by at least partially overmolding an inner surface of the at least one mixed water outlet (7, 8) such that the overmolding (68, 69) seals the at least one mixed water outlet (7, 8).

## Revendications

1. Conduit d'eau (1) en matière plastique pour une robinetterie mélangeuse (2), comportant au moins :
- un conduit d'eau extérieur (3) en matière plastique de forme tubulaire qui s'étend le long d'un axe longitudinal (4) ;
- un conduit d'eau intérieur (5) en matière plastique de forme tubulaire, qui s'étend le long de l'axe longitudinal (4) et qui est placé au moins partiellement dans le conduit d'eau extérieur (3) en matière plastique, de telle sorte qu'entre le conduit d'eau intérieur (5) en matière plastique et le conduit d'eau extérieur (3) en matière plastique soit constituée au moins une canalisation d'eau chaude (6) ; et
- au moins une sortie d'eau mitigée (7, 8),
**caractérisé en ce que**
l'au moins une sortie d'eau mitigée (7, 8) s'étend à travers le conduit d'eau intérieur (5) en matière plastique et le conduit d'eau extérieur (3) en matière plastique, l'au moins une sortie d'eau mitigée (7, 8) comportant au moins partiellement un surmoulage (68, 69) en matière plastique, le surmoulage {68, 69) étant créé en surmoulant au moins partiellement une surface intérieure de l'au moins une sortie d'eau mitigée (7, 8), de sorte que le surmoulage (68, 69) assure l'étanchéité de l'au moins une sortie d'eau mitigée (7, 8).

2. Conduit d'eau (1) en matière plastique selon la revendication 1 du brevet, le surmoulage (68, 69) étant constitué au moins partiellement en forme de manchon.

3. Conduit d'eau (1) en matière plastique selon l'une quelconque des revendications précédentes du brevet, le surmoulage (68, 69) s'étendant d'une première surface périphérique (25) extérieure du conduit d'eau extérieur (3) en matière plastique jusqu'à une deuxième surface périphérique (26) extérieure du conduit d'eau intérieur (5) en matière plastique.

4. Conduit d'eau (1) en matière plastique selon l'une quelconque des revendications précédentes du brevet, dans la zone d'une première surface périphérique (25) extérieure du conduit d'eau extérieur (3) en matière plastique, le surmoulage (68, 69) comportant une collerette (70, 71) périphérique.

5. Conduit d'eau (1) en matière plastique selon l'une quelconque des revendications précédentes du brevet, le surmoulage (68, 69) comportant au moins une structure d'assemblage (72, 73), à l'aide de laquelle le surmoulage (68, 69) est fixé par complémentarité de forme sur le conduit d'eau extérieur (3) en matière plastique ou sur le conduit d'eau intérieur (5) en matière plastique.

6. Conduit d'eau (1) en matière plastique selon la revendication 5 du brevet, l'au moins une structure d'assemblage (72, 73) étant conçue sous la forme d'une barrette périphérique.

7. Conduit d'eau (1) en matière plastique selon l'une quelconque des revendications précédentes du brevet, le surmoulage (68, 69) étant constitué au moins partiellement en une matière identique à celle du conduit d'eau extérieur (3) en matière plastique ou du conduit d'eau intérieur (5) en matière plastique.

8. Conduit d'eau (1) en matière plastique selon l'une quelconque des revendications précédentes du brevet, l'au moins une sortie d'eau mitigée (7, 8) s'étendant au moins partiellement à travers l'au moins une canalisation d'eau chaude (6).

9. Conduit d'eau (1) en matière plastique selon l'une quelconque des revendications précédentes du brevet, comportant :
- une première sortie d'eau mitigée (7), qui s'étend à travers le conduit d'eau intérieur (5) en matière plastique et le conduit d'eau extérieur (3) en matière plastique ; et
- une deuxième sortie d'eau mitigée (8), qui s'étend à travers le conduit d'eau intérieur (5) en matière plastique et le conduit d'eau extérieur (3) en matière plastique, la première sortie d'eau mitigée (7) et la deuxième sortie d'eau mitigée (8) étant constituées en étant décalées l'une par rapport à l'autre autour de l'axe longitudinal (4) avec un angle (9) de 100° à 140°.

10. Robinetterie mélangeuse (2), comportant au moins :
- un corps (15) de robinetterie, doté d'une arrivée d'eau chaude (16) pour de l'eau chaude et d'une arrivée d'eau froide (17) pour de l'eau froide ;
- une vanne mélangeuse (18), destinée à mélanger l'eau chaude et l'eau froide en une eau mitigée ; et
- un conduit d'eau (1) en matière plastique selon l'une quelconque des revendications précédentes du brevet, l'eau chaude pouvant être alimentée vers la vanne mélangeuse (18) à travers le conduit d'eau (1) en matière plastique sans contact avec le corps (15) de robinetterie.

11. Procédé, destiné à fabriquer un conduit d'eau (1) en matière plastique selon l'une quelconque des revendications 1 à 9 du brevet, comportant au moins les étapes suivantes, consistant à :
a) mettre à disposition un conduit d'eau extérieur (3) en matière plastique de forme tubulaire, qui s'étend le long d'un axe longitudinal (4) ;
b) placer un conduit d'eau intérieur (5) en matière plastique de forme tubulaire au moins partiellement dans le conduit d'eau extérieur (3) en matière plastique, de telle sorte qu'entre le conduit d'eau intérieur (5) en matière plastique et le conduit d'eau extérieur (3) en matière plastique soit constituée au moins une canalisation d'eau chaude (6) ; et
c) créer au moins un surmoulage (68, 69) dans au moins une sortie d'eau mitigée (7, 8), qui s'étend à travers le conduit d'eau intérieur (5) en matière plastique et le conduit d'eau extérieur (3) en matière plastique, le surmoulage (68, 69) étant créé en surmoulant au moins partiellement une surface intérieure de l'au moins une sortie d'eau mitigée (7, 8), de sorte que le surmoulage (68, 69) assure l'étanchéité de l'au moins une sortie d'eau mitigée (7, 8).
